# EUROPÄISCHE PATENTSCHRIFT

(11) **EP 0 905 916 B1**
(45) Veröffentlichungstag und Bekanntmachung des Hinweises auf die Patenterteilung: **01.06.2005**
(21) Anmeldenummer: 98112713.7
(22) Anmeldetag: 09.07.1998
(51) Int. Cl.: H04B 1/40, H04B 1/16, H04J 3/06, H04B 7/005, B60C 23/04, H04L 12/12

(54) **Verfahren und System zur Übertragung von Daten in einem Luftdruckkontrollsystem eines Kraftfahrzeuges**
Method and system for data transmission in a pressure control system of a motor vehicle
Procédé et système pour la transmission de données dans un système de contrôle de pression pour véhicule à moteur

(30) Priorität: 30.08.1997 DE 19737945
(43) Veröffentlichungstag der Anmeldung: 31.03.1999
(73) Patentinhaber: Continental Aktiengesellschaft, 30165 Hannover (DE)
(72) Erfinder: Ernst, Gerhard, Dr., 30629 Hannover (DE)

(56) Entgegenhaltungen:
- WO-A-94/06640
- GB-A- 2 307 139
- US-A- 5 440 560
- US-A- 5 481 259

## Beschreibung

Die Erfindung betrifft ein Verfahren gemäß dem Oberbegriff des Anspruchs 1.

Die Erfindung betrifft ferner ein Luftdruckkontrollsystem zur Durchführung des Verfahrens.

Verfahren zur Übertragung von Daten in einem Luftdruckkontrollsystem sind an sich bekannt. Die Luftdruckkontrollsysteme sind in einem Kraftfahrzeug eingebaut und bestehen im wesentlichen aus einer Zentraleinheit und Luftdruckkontrollvorrichtungen, von denen jeweils eine einem Reifen des Kraftfahrzeuges zugeordnet ist. Mit Hilfe der Luftdruckkontrollvorrichtungen wird der Luftdruck in den entsprechenden Reifen des Kraftfahrzeuges erfaßt und die Luftdruckkontrollvorrichtungen übermitteln in zeitlichen Abständen eine Datensendung an die Zentraleinheit. Jede Datensendung enthält neben dem gemessenen Luftdruck zusätzlich eine individuelle Kennung, anhand der in der Zentraleinheit überprüft werden kann, aus welcher Radposition der in der Datensendung enthaltene Luftdruck übermittelt worden ist (in der Zentraleinheit ist beispielsweise gespeichert, daß die individuelle Kennung III von der Radposition vorne links übermittelt wird). Die Zentraleinheit vergleicht die übermittelten Luftdruckwerte mit gespeicherten Soll-Luftdruckwerten und es ergeht eine Warnung an den Fahrer des Kraftfahrzeuges, wenn der gemessene Luftdruck von dem gemessenen Soll-Luftdruck über ein vorgegebenes Maß hinaus abweicht. Ergeht keine Meldung an den Fahrer, so ist dies ein Anzeichen dafür, daß in allen Reifen des Kraftfahrzeuges der richtige Luftdruck vorliegt.

Die Messung des Reifenluftdruckes und die Meldung eines falschen Reifenluftdruckes ist während der Fahrt des Kraftfahrzeuges besonders wichtig. Es ist jedoch ebenfalls wichtig, daß dem Fahrer bei Inbetriebnahme des Kraftfahrzeuges angezeigt wird, daß in allen Reifen der richtige Luftdruck vorliegt und er somit gefahrlos losfahren kann. Die Luftdruckkontrollvorrichtungen messen dazu auch im Stillstand des Kraftfahrzeuges den Luftdruck in den Reifen in zeitlichen Abständen und übermitteln ihn an die Zentraleinheit, wo er auf Richtigkeit überprüft wird. Bei der Inbetriebnahme des Kraftfahrzeuges kann die Zentraleinheit dem Fahrer dann anhand der zuletzt übermittelten Werte zuverlässig anzeigen, ob der Luftdruck in allen Reifen des Kraftfahrzeuges den richtigen Wert annimmt. Daraus folgt, daß die Zentraleinheit auch im Stillstand des Kraftfahrzeuges die Datensendungen der Luftdruckkontrollvorrichtungen empfangen können muß, wozu die Zentraleinheit mit Energie versorgt werden muß. Diese Energie wird im Stillstand des Kraftfahrzeuges von der Fahrzeugbatterie bereitgestellt, die infolgedessen, insbesondere bei einem längeren Stillstand, bis zur völligen Entleerung belastet werden kann.

Es sind bereits allgemeine Datenübertragungssysteme für Kraftfahrzeuge bekannt, in denen der Energieverbrauch des Empfängers minimiert werden kann. Diese Datenübertragungssysteme enthalten beispielsweise einen elektronischen Zündschlüssel (Sender), der ein Signal mit einer individuellen Kennung an einen Empfänger in der Tür eines Kraftfahrzeuges aussendet. Der Empfänger veranlaßt das Öffnen der Tür, wenn die von dem Schlüssel ausgesendete individuelle Kennung zu dem entsprechenden Kraftfahrzeug gehört. Bei derartigen Datenübertragungssystemen befindet sich der Empfänger im allgemeinen in einem stand-by-modus, in dem er ein Grundsignal von den Sendern, d. h. von den Zündschlüsseln, empfangen kann. Wenn ein Grundsignal empfangen wird, wird im Empfänger eine Verstärkerschaltung eingeschaltet, die überprüft, ob das empfangene Grundsignal einen fahrzeugtypischen Charakter aufweist. Ist dies der Fall, so wird in dem Empfänger eine nachfolgende Datenauswerteeinheit eingeschaltet, die die von dem Zündschlüssel übermittelte individuelle Kennung mit der in dem Empfänger gespeicherten individuellen Kennung vergleicht, und bei Übereinstimmung wird eine Öffnung der Tür veranlaßt. Da sowohl die energieverzehrende Verstärkerschaltung als auch die energieverzehrende Datenauswerteeinheit nur im Bedarfsfall eingeschaltet werden, wird die Batterie, die die Zentraleinheit mit Energie versorgt, weitgehend geschont.

Das in dem letzten Absatz erläuterte Verfahren zur Übertragung von Daten in einem Datenübertragungssystem ist auf Luftdruckkontrollsysteme nicht übertragbar, da, wie eingangs erläutert, von den Sendern eines Luftdruckkontrollsystems auch im Stillstand des Fahrzeuges ständig Daten gesendet werden. Steht ein mit einem entsprechenden Luftdruckkontrollsystem ausgestattetes Kraftfahrzeug also beispielsweise auf einem Großparkplatz, so würde bei Anwendung des obigen Verfahrens in der Zentraleinheit zumindest ständig die Verstärkerschaltung eingeschaltet, da die Zentraleinheit von den umstehenden Fahrzeugen sehr häufig das Grundsignal empfangen würde. Der Energieverbrauch der Zentraleinheit ließe sich also nicht signifikant senken. Darüber hinaus ist festzustellen, daß das Grundsignal von den Sendern über einen gewissen Zeitraum ausgesendet werden muß, damit in der Zentraleinheit die Verstärkerschaltung eingeschaltet wird. Dadurch wird wiederum die Batterie der Sender stark belastet.

Aus der US 5,481,259 ist ein System mit einer Zentraleinheit und mehreren lokalen Einheiten bekannt. Diese Druckschrift befasst sich ausschließlich mit dem Problem, Energie in den lokalen Einheiten zu sparen.

Aus der WO 94/06640 ist ein Luftdruckkontrollsystem eines Kraftfahrzeuges mit einer Zentraleinheit und einer Luftdruckkontrollvorrichtung, die einem Rad des Kraftfahrzeuges zugeordnet ist bekannt.

Der Erfindung liegt die Aufgabe zugrunde, ein Verfahren zur Übertragung von Daten in einem Luftdruckkontrollsystem eines Kraftfahrzeuges zu schaffen, bei dem sowohl die Energieressourcen der Zentraleinheit als auch die Energieressourcen der Luftdruckkontrollvorrichtungen geschont werden. Der Erfindung liegt ferner die Aufgabe zugrunde, ein Luftdruckkontrollsystem für ein Kraftfahrzeug zu schaffen, in dem das Verfahren durchführbar ist.

Die Aufgabe wird durch die kennzeichnenden Merkmale des Anspruchs 1 gelöst.

Die Aufgabe wird ebenfalls durch die kennzeichnenden Merkmale des nebengeordneten Anspruchs 7 gelöst. Im folgenden wird in der Beschreibungseinleitung die Zentraleinheit Empfänger und eine Luftdruckkontrollvorrichtung Sender genannt.

Unter dem Wort "Datenempfangsmodus" ist im Sinne der Beschreibung der Modus gemeint, in dem der Empfänger die von den Sendern übermittelten Daten empfangen und vollständig verarbeiten kann. Unter der Formulierung, daß "kurz vor dem Zeitpunkt, zu dem die nächste Datensendung zu erwarten ist, das Einschaltsignal generiert wird" ist zu verstehen, daß die Zeitspanne zwischen dem Zeitpunkt, zu dem das Einschaltsignal generiert wird und dem Zeitpunkt, zu dem die nächste Datensendung zu erwarten ist, wesentlich kleiner (also mindestens eine Größenordnung kleiner) ist, als die Zeitspanne zwischen zwei Datensendungen eines Senders.

Der Grundgedanke der Erfindung ist darin zu sehen, daß der Empfänger des Systems nur dann in den Datenempfangsmodus eingeschaltet wird, wenn eine Datensendung von einem Sender zu erwarten ist und daß das Einschaltsignal, mit dem der Datenempfangsmodus eingeschaltet wird, in dem Empfänger selbst generiert wird. Nach Empfang der Datensendung in dem Empfänger wird in dem Empfänger ein Ausschaltsignal generiert, das den Empfänger wieder von dem Datenempfangsmodus in den stand-by-modus überführt.

Die mit der Erfindung erzielten Vorteile sind insbesondere darin zu sehen, daß der Empfänger nur noch dann in den Datenempfangsmodus geschaltet wird, wenn eine Datensendung eines zu dem System gehörigen Senders zu erwarten ist. Der Empfänger befindet sich also nur noch dann im energieverzehrenden Datenempfangsmodus, wenn es unbedingt notwendig ist. Ein weiterer Vorteil der Erfindung ist darin zu sehen, daß von den Sendern kein Grundsignal gesendet zu werden braucht, mit dessen Hilfe der Empfänger vom stand-by-modus in den Datenempfangsmodus überführt wird. Vielmehr wird dieses Einschaltsignal innerhalb des Empfängers selbst generiert und somit wird auch die Batterie der Sender geschont.

Gemäß einem Ausführungsbeispiel der Erfindung übermittelt jeder Sender in regelmäßigen zeitlichen Abständen Daten an den Empfänger, wobei die Information über den regelmäßigen zeitlichen Abstand in den Empfänger eingegeben wird. Enthält das System beispielsweise einen Sender, der in regelmäßigen zeitlichen Abständen von zum Beispiel 60 Sekunden eine Datensendung an den Empfänger übermittelt, so kann bereits bei der Herstellung in den Empfänger eingegeben werden, daß von dem Sender, mit dem der Empfänger kommuniziert, alle 60 Sekunden Datensendungen zu erwarten sind. Enthält das Datenübertragungssystem mehrere Sender, so übermittelt jeder Sender mit jeder Datensendung zweckmäßigerweise eine ihm zugeordnete individuelle Kennung. In dem Empfänger ist dann gespeichert, in welchen regelmäßigen zeitlichen Abständen Datensendungen zu erwarten sind, die eine bestimmte individuelle Kennung enthalten (beispielsweise ist in dem Empfänger gespeichert, daß ein Sender mit der individuellen Kennung A alle 60 Sekunden eine Datensendung übermittelt und der Sender mit der individuellen Kennung B alle 45 Sekunden eine Datensendung übermittelt).

Gemäß einem weiteren Ausführungsbeispiel der Erfindung nach Anspruch 3 sendet jeder Sender in zeitlichen Abständen Daten an den Empfänger und jede Datensendung enthält eine Information darüber, in welchen zeitlichen Abständen die nächste Datensendung von einem Sender zu erwarten ist. Auch bei diesem Ausführungsbeispiel übermittelt jeder Sender zweckmäßigerweise mit jeder Datensendung eine individuelle Kennung an den Empfänger, wenn das Datenübertragungssystem mehrere Sender enthält. Der Vorteil dieser Weiterbildung ist darin zu sehen, daß in den Empfänger nicht eingegeben zu werden braucht, wann von einem bestimmten Sender die nächste Datensendung zu erwarten ist, da dies dem Empfänger vom Sender selbst mitgeteilt wird. Aus diesem Grunde ist es sehr einfach, in dem System einen Sender auszutauschen. Dies ist besonders wichtig, da dort die Sender, beispielsweise beim Wechsel von Sommerreifen auf Winterreifen, häufig ausgewechselt werden.

Gemäß einer Weiterbildung des Anspruchs 3 nach Anspruch 4 wird die Information darüber, in welchem zeitlichen Abstand die nächste Datensendung gesendet wird, nach einem Algorithmus in dem Sender generiert. Durch den Algorithmus wird vorteilhafterweise eine Zufallszahl generiert, die den zeitlichen Abstand beispielsweise in Sekunden angibt. Durch die Verwendung eines Algorithmus, der Zufallszahlen generiert, ist weitgehend sichergestellt, daß die mehreren Sender eines Systems ihre Datensendungen immer zu unterschiedlichen Zeitpunkten an den Empfänger übermitteln.

Gemäß einer Weiterbildung der Erfindung nach Anspruch 5 wird in dem Empfänger anhand eines Vergleiches der zeitlichen Abstände, zu denen in dem Empfänger Datensendungen eingehen und die von dem Sender angegeben worden sind, ein Korrekturwert berechnet und abgespeichert, der es erlaubt, eine von dem Sender angegebene Zeitspanne in eine im Empfänger gemessene Zeitspanne umzuwandeln. Der Vorteil dieser Weiterbildung ist darin zu sehen, daß die Uhren in den Sendern und in dem Empfänger aufeinander kalibriert werden können, so daß der Zeitraum von der Generierung des Einschaltsignals in dem Emp-Empfänger bis zum Empfang der Datensendung minimiert werden kann. Teilt ein Sender dem Empfänger beispielsweise mit, daß die nächste Datensendung nach 60 Sekunden zu erwarten ist und wird in dem Empfänger von dem Empfang der letzten Datensendung bis zum Empfang der nächsten Datensendung dieses Senders eine Zeitspanne von 66 Sekunden gemessen, so heißt dies für den Empfänger, daß ein Korrekturwert von 1,1 zu berücksichtigen ist. Gibt der Sender in dem Datentelegramm, was als nächstes von dem Empfänger empfangen wird, also an, daß das nächste Datentelegramm nach 120 Sekunden zu erwarten ist, so wird in dem Empfänger der Korrekturwert berücksichtigt und der Empfänger "weiß", daß bezüglich seiher Uhr die nächste Datensendung erst in 132 Sekunden zu erwarten ist. Es reicht dann also beispielsweise aus, wenn das Einschaltsignal erst nach 131,5 Sekunden, gemessen mit der Uhr im Empfänger, generiert wird, anstatt nach beispielsweise 119,5 Sekunden, die der Empfänger ohne Berücksichtigung des Korrekturwertes zugrunde legen würde.

Gemäß einer Weiterbildung der Erfindung nach Anspruch 6 schaltet sich der Empfänger in den Datenempfangsmodus und verbleibt dort solange, bis er von einem Sender eine neue Datensendung empfängt, wenn er eine vorherige erwartete Datensendung dieses Senders nicht empfangen konnte. Der Vorteil dieser Weiterbildung ist darin zu sehen, daß das erfindungsgemäße Verfahren auch dann weiter betrieben werden kann, wenn einmal eine Datensendung eines Empfängers nicht empfangen werden konnte. Dies kann beispielsweise dadurch geschehen, daß sich der Empfänger zu spät von dem stand-by-modus in den Datenempfangsmodus eingeschaltet hat und somit die Datensendung nicht empfängt oder aber daß bei einem System mit mehreren Sendern zwei oder mehr Sender ihre Datensendungen gleichzeitig an den Empfänger übermitteln, die dort nicht getrennt und somit nicht verarbeitet werden können. Enthält beispielsweise das Datentelegramm eines Senders die individuelle Kennung A und die Information, daß die nächste Datensendung in 45 Sekunden übermittelt wird und wird dieses nächste Datentelegramm nach 45 Sekunden von dem Empfänger nicht empfangen, so schaltet sich der Empfänger solange in den Datenempfangsmodus, bis er wiederum ein Datentelegramm empfängt, das die individuelle Kennung A enthält. Dieses Datentelegramm enthält dann wiederum eine Information darüber, wann das nächste Datentelegramm zu erwarten ist, so daß der Empfänger danach wiederum seine normale Arbeitsweise gemäß Anspruch 1 aufnehmen kann. Kommt es durch irgendwelche Umstände dazu, daß der Empfänger in einem Zeitraum die Datensendungen sämtlicher Sender nicht empfängt, so schaltet sich der Empfänger solange in den Datenempfangsmodus, bis er wiederum Datensendungen von sämtlichen Sendern, die jeweils eine andere individuelle Kennung aufweisen, empfangen hat.

Weitere Vorteile und ein Ausführungsbeispiel der Erfindung werden im Zusammenhang mit den nachstehenden Figuren erläutert, darin zeigt:
- Fig. 1: ein Luftdruckkontrollsystem in schematischer Darstellung,
- Fig. 2: ein Diagramm,
- Fig. 3: eine Luftdruckkontrollvorrichtung in schematischer Darstellung,
- Fig. 4: eine Zentraleinheit in schematischer Darstellung.

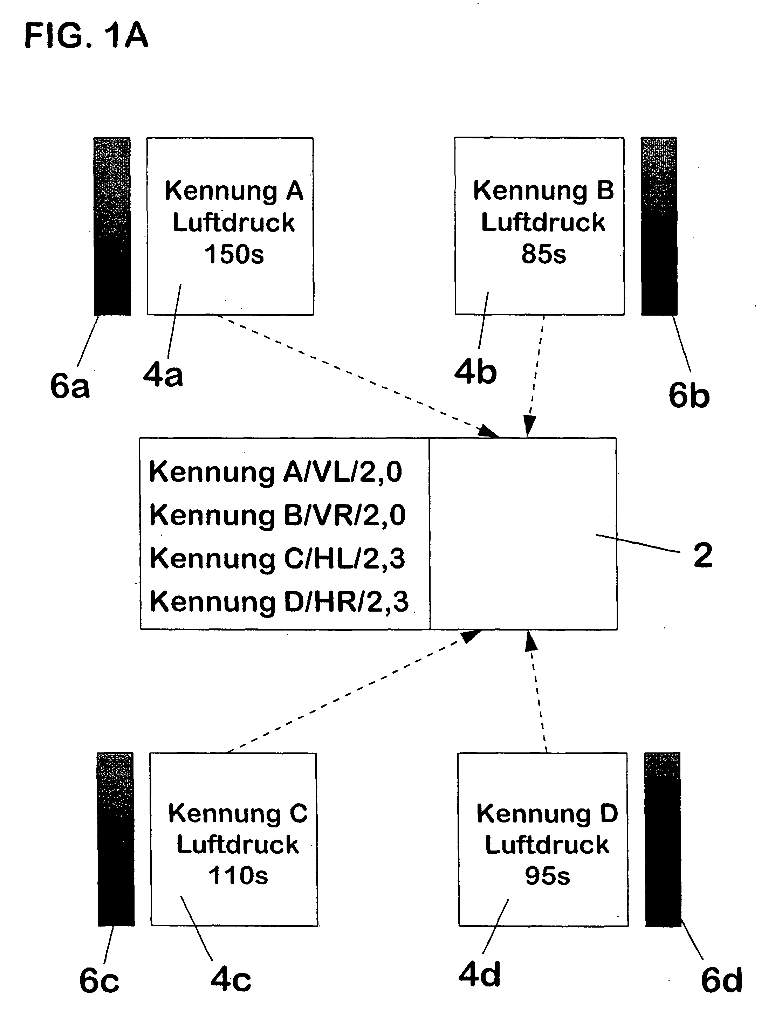

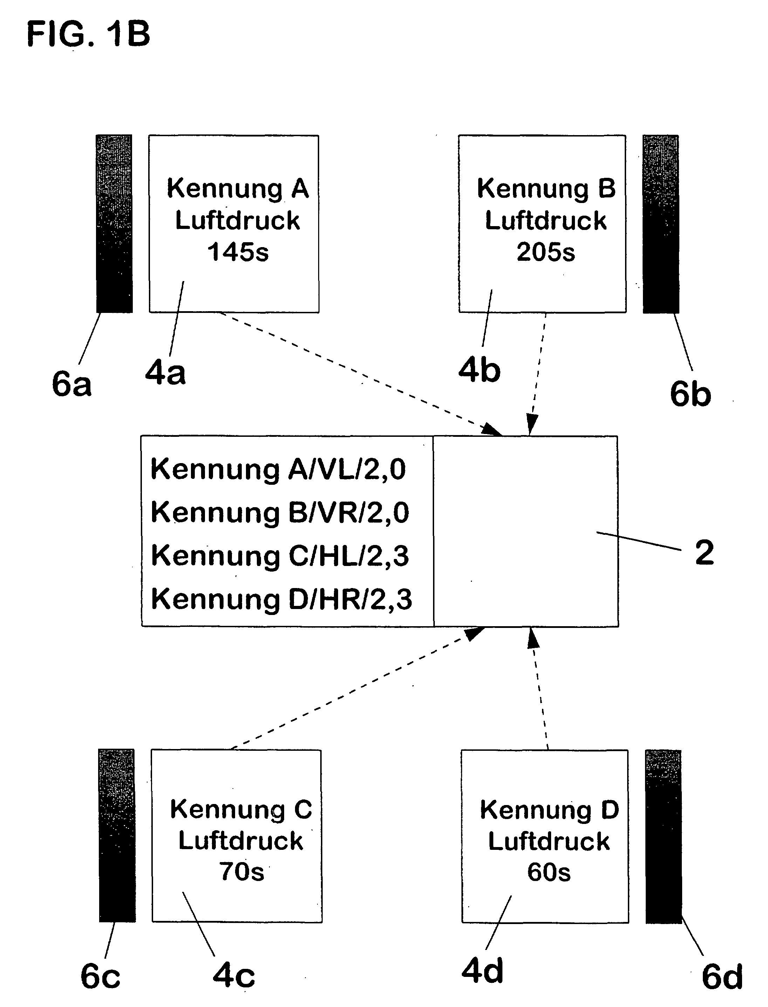

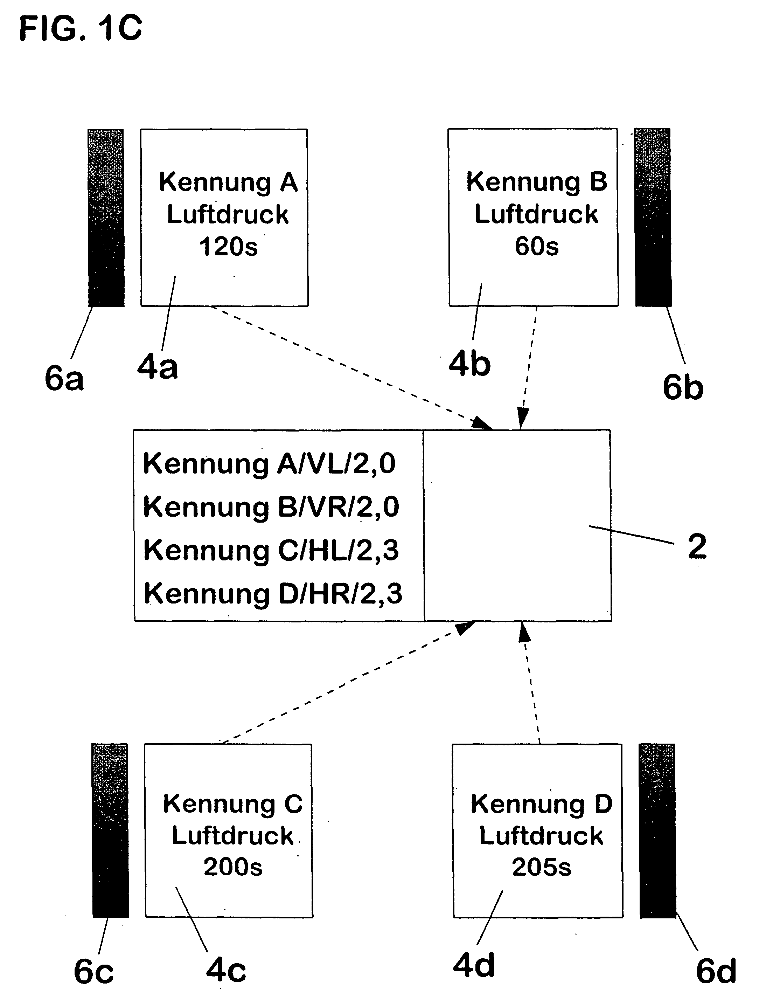

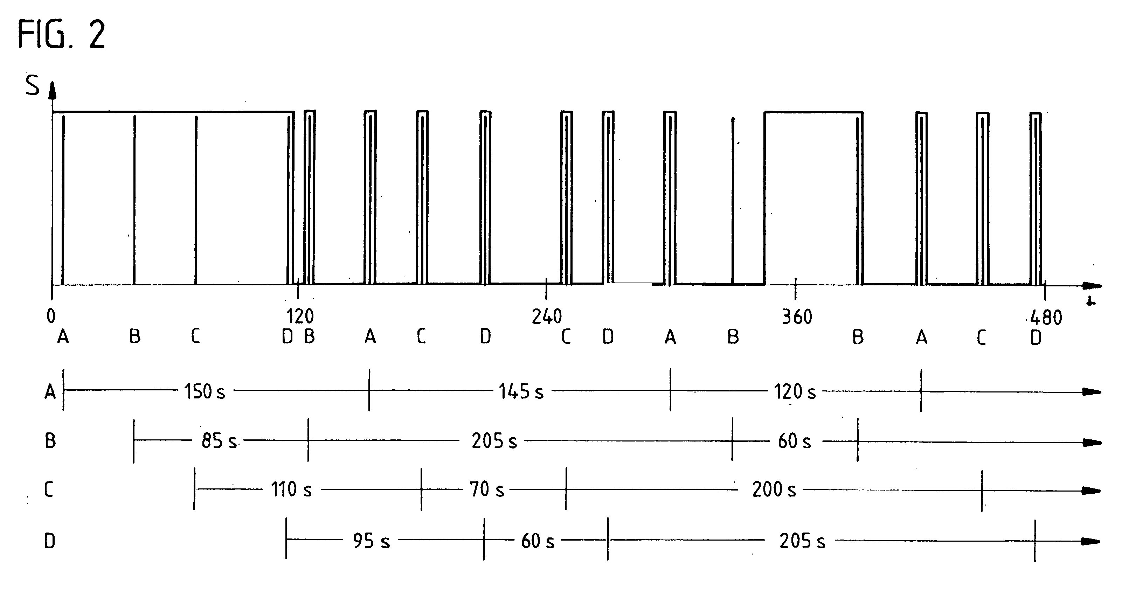

Figur 1 zeigt in stark schematisierter Darstellung ein Luftdruckkontrollsystem in einem Kraftfahrzeug, wobei nur die für die nachfolgenden Erläuterungen notwendigen Bestandteile gezeigt sind. Das Luftdruckkontrollsystem verfügt über eine Zentraleinheit 2 (Empfänger) und über Luftdruckkontrollvorrichtungen 4a bis 4d, von denen jeweils eine einem Rad 6a bis 6d des Kraftfahrzeuges zugeordnet ist. Die Zentraleinheit 2 enthält einen Speicher, in dem eine individuelle Kennung, die von einer Luftdruckkontrollvorrichtung 4a bis 4d übertragen wird, zusammen mit der Position, der die entsprechende Luftdruckkontrollvorrichtung 4a bis 4d zugeordnet ist, und mit einem Luftdruck, der an dem Reifen in dieser Position vorliegen soll, gespeichert ist. In dem Speicher ist also beispielsweise gespeichert, daß die individuelle Kennung A von der Radposition vome links (abgekürzt mit VL) übermittelt wird und daß an dieser Radposition ein Luftdruck von 2,0 bar vorliegen soll, usw. Von den Luftdruckkontrollvorrichtungen 4a bis 4d werden in zeitlichen Abständen Datensendungen an die Zentraleinheit 2 übermittelt, wobei jede Datensendung die Kennung der entsprechenden Luftdruckkontrollvorrichtung 4a bis 4d, den an der entsprechenden Radposition gemessenen Luftdruck und eine Information darüber enthält, in welchem zeitlichen Abstand zu der gegenwärtigen Datensendung die nächste Datensendung ausgesendet wird. Anhand der übermittelten Kennung wird in der Zentraleinheit durch Vergleich ermittelt, von welcher Radposition aus eine Datensendung stammt und es wird der gespeicherte Solldruckwert mit dem übermittelten Luftdruck verglichen. Weicht der übermittelte Luftdruck über ein vorgegebenes Maß hinaus von dem Soll-Luftdruck ab, so gibt die Zentraleinheit 2 eine Warnung an den Kraftfahrzeugfahrer mit dem Inhalt ab, daß an einer bestimmten Radposition des Kraftfahrzeuges ein falscher Luftdruck vorliegt. Im Zusammenhang mit der Figur 1 und der Figur 2 wird nun erläutert, wie das Verfahren zur Übertragung von Daten in dem Luftdruckkontrollsystem im einzelnen durchgeführt wird:

Bei der Figur 1a wird davon ausgegangen, daß der Zentraleinheit 2 keinerlei Daten vorliegen, anhand derer bestimmt werden kann, wann die nächsten Datensendungen zu erwarten sind. Dies ist beispielsweise bei einem fabrikneuen Fahrzeug der Fall. Die Zentraleinheit 2 schaltet sich dann solange in den Datenempfangsmodus, bis von allen Luftdruckkontrollvorrichtungen 4a bis 4d eine Datensendung empfangen werden konnte. Da alle Datensendungen der Luftdruckkontrollvorrichtungen 4a bis 4d eine Information darüber enthalten, wann nach der gegenwärtigen Datensendung die nächste Datensendung zu erwarten ist, kann die Zentraleinheit 2 dann, wenn sie die Datensendung von allen Luftdruckkontrollvorrichtungen 4a bis 4d erhalten hat, ein Ausschaltsignal generieren und somit von dem Datenempfangsmodus in den stand-by-modus übergehen. Die Zentraleinheit "weiß", daß von allen Luftdruckkontrollvorrichtungen 4a bis 4d eine Datensendung an sie übermittelt worden ist, wenn sie eine Anzahl von Datensendungen erhalten hat, in denen alle in der Zentraleinheit 2 abgespeicherten individuellen Kennungen A bis D enthalten sind.

Beispiel anhand Figur 1a: Zu einem bestimmten Zeitpunkt wird von der Luftdruckkontrollvorrichtung 4a eine Datensendung an die Zentraleinheit übermittelt, die die Kennung A, den in dem Reifen 6a gemessenen Luftdruck und eine Information darüber enthält, wann nach der gegenwärtigen Datensendung die nächste Datensendung von der Luftdruckkontrollvorrichtung 4a an die Zentraleinheit 2 übermittelt wird, in diesem Fall nach 150 Sekunden. Zu einem anderen Zeitpunkt übermittelt die Luftdruckkontrollvorrichtung 4b eine Datensendung an die Zentraleinheit 2, die die analogen Daten enthält, wobei die Information darüber, wann nach der gegenwärtigen Datensendung die nächste Datensendung von der Luftdruckkontrollvorrichtung 4b übermittelt wird, 85 Sekunden beträgt. Zu einem anderen Zeitpunkt übermittelt die Luftdruckkontrollvorrichtung 4c eine Datensendung an die Zentraleinheit 2, die ebenfalls analoge Daten wie die Datensendung der Luftdruckkontrollvorrichtung 4a enthält, wobei als Zeitabstand bis zur nächsten Datensendung hier 110 Sekunden angegeben sind. Zu einem späteren Zeitpunkt übermittelt die Luftdruckkontrollvorrichtung 4d eine Datensendung an die Zentraleinheit 2, die ebenfalls die analogen Daten enthält, wie die Datensendung der Luftdruckkontrollvorrichtung 4a, wobei als Zeitabstand bis zur nächsten Dätensendung hier 95 Sekunden angegeben sind. Nachdem die Zentraleinheit 2 also von jeder Luftdruckkontrollvorrichtung 4a bis 4d eine Datensendung mit einer Information darüber erhalten hat, in welchem Zeitabstand, gemessen von der letzten Datensendung an, von der entsprechenden Luftdruckkontrollvorrichtung 4a bis 4d die nächste Datensendung zu erwarten ist, wird in der Zentraleinheit 2 ein Ausschaltsignal generiert. Dies führt dazu, daß die Zentraleinheit von dem Datenempfangsmodus in den stand-by-modus übergeht (s. Fig. 2; die Datensendungen von allen vier Luftdruckkontrollvorrichtungen sind in dem gewählten Beispiel innerhalb von ca. 120 Sekunden in der Reihenfolge A, B, C, D eingegangen. Die Fig. 2 ist wie folgt zu verstehen: Ein Balken auf der waagerechten Zeitachse bedeutet, daß zu dem Zeitpunkt, in dem der Balken steht, eine Datensendung bei der Zentraleinheit 2 eingeht. Unterhalb des Balkens steht, von welcher Luftdruckkontrollvorrichtung 4a - 4d die Datensendung stammt, was an der individuellen Kennung A, B, C bzw. D zu erkennen ist. Unterhalb des Diagramms, in dem das bei der Zentraleinheit 2 empfangene Signal über der Zeit aufgetragen ist, ist für jede Luftdruckkontrollvorrichtung ein "Zeitstrahl" eingezeichnet, dem zu entnehmen ist, wann nach dem Empfang der letzten Datensendung in der Zentraleinheit 2 die nächste Datensendung zu erwarten ist.)

In der Zentraleinheit 2 wird nun kurz vor dem Zeitpunkt, zu dem die nächste Datensendung von einer der Luftdruckkontrollvorrichtungen 4a bis 4d zu erwarten ist, ein Einschaltsignal generiert, mit dem die Zentraleinheit 2 von dem stand-by-modus in den Datenempfangsmodus überführt wird. Das erste Mal wird in der Zentraleinheit 2 das Einschaltsignal kurz vor Ablauf der 85 Sekunden generiert, die als Zeitabstand in der Datensendung angegeben worden sind, die von der Luftdruckkontrollvorrichtung 4b an die Zentraleinheit 2 übermittelt worden sind (s. Fig. 1a). Die Zentraleinheit 2 wartet nach der Generierung des Einschaltsignals im Datenempfangsmodus solange ab, bis sie von der Luftdruckkontrollvorrichtung 4b eine neue Datensendung empfängt, die wiederum eine Information darüber enthält, wann nach der gegenwärtig empfangenen Datensendung die nächste Datensendung zu erwarten ist (nämlich nach 205 weiteren Sekunden; s. Figur 1b).

Nach Erhalt der Datensendung von der Luftdruckkontrollvorrichtung 4b wird in der Zentraleinheit 2 das Ausschaltsignal generiert, so daß die Zentraleinheit 2 wieder von dem Datenempfangsmodus in den stand-by-modus übergeht. In analoger Art und Weise wird von der Zentraleinheit immer dann ein Einschaltsignal generiert, wenn kurze Zeit später eine Datensendung von einer der Luftdruckkontrollvorrichtungen 4a, 4c und 4d zu erwarten ist. Auch diese Datensendungen enthalten ebenfalls jeweils eine Information darüber, wann nach der gegenwärtigen Datensendung die nächste Datensendung zu erwarten ist, nämlich nach 145 Sekunden, bzw. 180 Sekunden, bzw. 210 Sekunden (s. Fig. 1b und Fig. 2).

Es kann dazu kommen, daß die Zentraleinheit 2 eine der erwarteten Datensendungen nicht empfangen kann. Dies kann beispielsweise daran liegen, daß in der Zentraleinheit 2 das Einschaltsignal zu spät generiert wird und die Zentraleinheit 2 somit zu spät in den Datenempfangsmodus übergeht. Eine andere Möglichkeit besteht darin, daß zwei der Luftdruckkontrollvorrichtungen 4a bis 4d zufällig gleichzeitig eine Datensendung an die Zentraleinheit 2 übermitteln, so daß die Datensendungen von der Zentraleinheit 2 nicht verarbeitet werden können. Kommt es zu einem derartigen Vorfall, so verbleibt die Zentraleinheit 2 solange im Datenempfangsmodus, bis sie eine erneute Datensendung der entsprechenden Luftdruckkontrollvorrichtungen enthält, die eine erneute Information darüber enthalten, in welchem zeitlichen Abstand von der gegenwärtigen Datensendung die nächste Datensendung von der entsprechenden Luftdruckkontrollvorrichtung zu erwarten ist.

Auch dies wird an einem Beispiel kurz erläutert: Die Zentraleinheit 2 erwartet 205 Sekunden nach einer letzten Datensendung der Luftdruckkontrollvorrichtung 4b die nächste Datensendung dieser Luftdruckkontrollvorrichtung. Aus einem beliebigen Grund kommt es dazu, daß in der Zentraleinheit 2 das Einschaltsignal zu spät generiert wird, so daß die erwartete Datensendung nicht empfangen werden kann. In diesem Fall verbleibt die Zentraleinheit 2 solange im Datenempfangsmodus, bis die nächste Datensendung der Luftdruckkontrollvorrichtung 4b, die an der individuellen Kennung B erkannt werden kann, empfangen wird. Dies ist in dem gezeigten Ausführungsbeispiel nach weiteren 60 Sekunden der Fall. Die erneute Datensendung erhält wiederum eine Information darüber, wann nach der gegenwärtigen Datensendung die nächste Datensendung zu erwarten ist, so daß die Zentraleinheit 2 wiederum über alle benötigten Informationen zur weiteren Durchführung des Verfahrens verfügt. Unmittelbar nach Empfang der Datensendung von der Luftdruckkontrollvorrichtung 4b wird in der Zentraleinheit 2 das Ausschaltsignal generiert und die Zentraleinheit 2 dadurch in den stand-by-modus überführt.

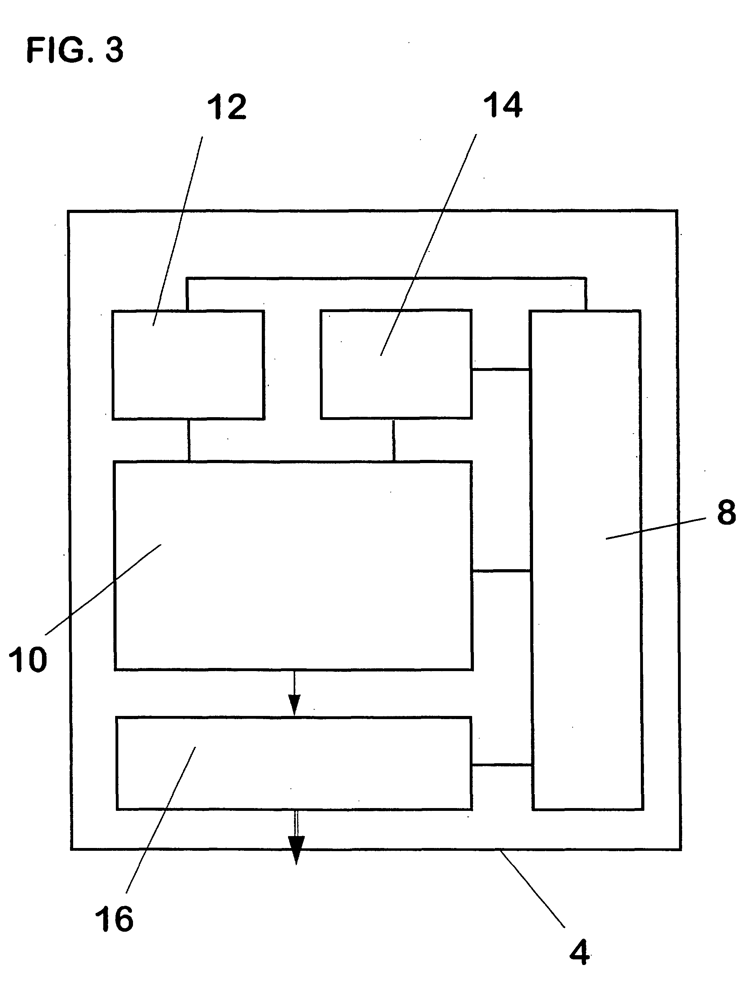

Figur 3 zeigt in stark schematisierter Darstellung den Aufbau einer Luftdruckkontrollvorrichtung 4, die über einen Mikroprozessor 10, einen Druckmesser 12, einen Taktgeber 14 und eine Ausgabeeinheit 16 verfügt, wobei alle genannten Bausteine 10 bis 16 von einer Batterie 8 mit Energie versorgt werden. Mit Hilfe des Druckmessers 12 wird der Luftdruck innerhalb des Reifens des Kraftfahrzeuges gemessen, dem die Luftdruckkontrollvorrichtung 4 zugeordnet ist und der gemessene Druckwert wird an den Mikroprozessor 10 übermittelt. Mit Hilfe des Taktgebers 14 wird die Taktfrequenz des Mikroprozessors 10 vorgegeben und weiterhin wird der Taktgeber 14 als Zeituhr benutzt, indem im Mikroprozessor 10 die von dem Taktgeber 14 abgegebenen Takte gezählt werden. Der Mikroprozessor 10 verfügt über einen Speicher, in dem ein Algorithmus programmiert ist, mit Hilfe dessen Zufallszahlen erzeugt werden können. Die jeweils zuletzt erzeugte Zufallszahl wird zusammen mit dem zuletzt gemessenen Druck und der ebenfalls in den Mikroprozessor 10 gespeicherten Kennung über die Ausgabeeinheit 16 an die Zentraleinheit 2 übermittelt. Ferner wird die zuletzt erzeugte Zufallszahl gespeichert und die nächste Datensendung wird von der Luftdruckkontrollvorrichtung dann übermittelt, wenn die durch die Zufallszahl in Sekunden vorgegebene Zeit verstrichen ist. In der Zwischenzeit zwischen der gegenwärtigen Datensendung und der nächsten Datensendung wird in den Mikroprozessor 10 mit Hilfe des gespeicherten Algorithmus eine neue Zufallszahl generiert und ebenfalls gespeichert. Ist als Zufallszahl beispielsweise 60 generiert und gespeichert worden, so bedeutet dies, daß in der gegenwärtigen Datensendung die Zeitinformation 60 Sekunden übermittelt wird und daß die nächste Datensendung nach 60 Sekunden an die Zentraleinheit 2 übermittelt wird. Wird durch den Taktgeber 14 des Mikroprozessors 10 also beispielsweise eine Taktfrequenz von 50 Hz angegeben, so wird, veranlaßt durch den Mikroprozessor 10, die nächste Datensendung nach 3.000 Takten an die Zentraleinheit 2 übermittelt.

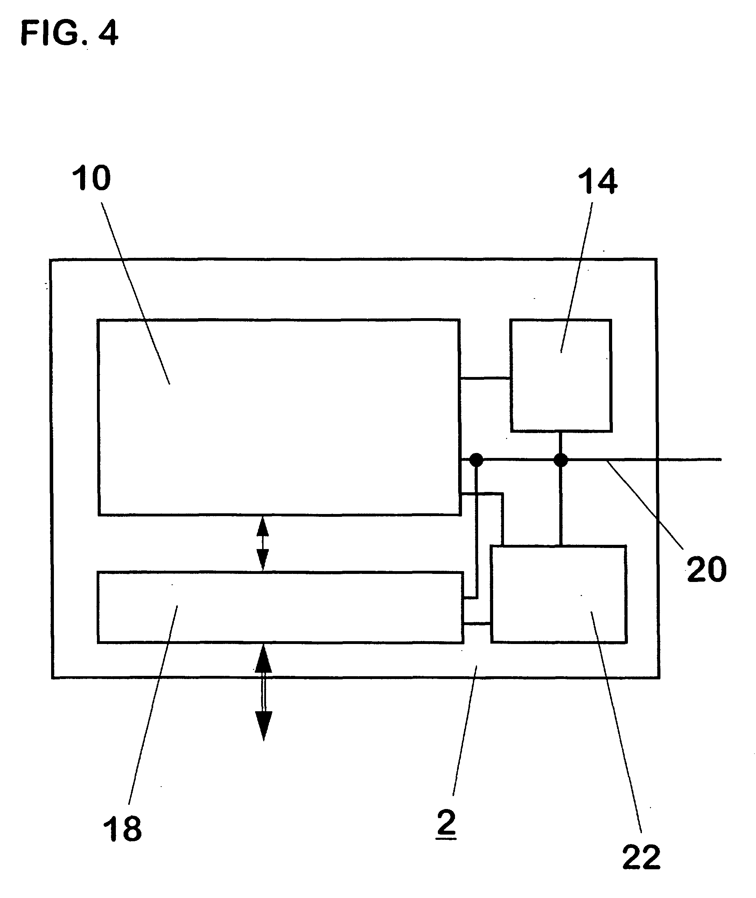

Figur 4 zeigt in stark schematisierter Darstellung die Zentraleinheit 2, die ebenfalls über einen Mikroprozessor 10, einen Taktgeber 14 und über eine Eingabe-/Ausgabeeinheit 18 verfügt, wobei die genannten Bausteine über die Leitung 20 durch eine externe Batterie mit Engergie versorgt werden. Mit Hilfe der Eingabe-/Ausgabeeinheit 18 empfängt die Zentraleinheit 2 die von den Luftdruckkontrollvorrichtungen 4 a bis 4d übermittelten Datensendungen und gibt sie an den Mikroprozessor 10 weiter, wo sie ausgewertet werden. Der Mikroprozessor 10 entnimmt einer gegenwärtigen Datensendung beispielsweise die Information, daß die nächste Datensendung von der entsprechenden Luftdruckkoritrollvorrichtung 4a bis 4d in 60 Sekunden zu erwarten ist. Arbeitet der Mikroprozessor 10 ebenfalls mit einer Frequenz von 50 Hz, so bedeutet dies, daß die nächste Datensendung der entsprechenden Luftdruckkontrollvorrichtung 4a bis 4d in 3.000 Takten zu erwarten ist. Unmittelbar nach Erhalt der gegenwärtigen Datensendung wird durch den Baustein 22 ein Ausschaltsignal generiert, mit dem die Zentraleinheit 2 von dem Datenempfangsmodus in den stand-by-modus überführt wird. In dem stand-by-modus hat die Zentraleinheit 2 nur einen geringen Energieverbrauch, da dann keine Daten empfangen und verarbeitet zu werden brauchen, sondern nur das durch den Taktgeber 14 vorgegebene Taktsignal gezählt zu werden braucht. Kurz bevor die nächste Datensendung von der Luftdruckkontrollvorrichtung 4a bis 4d erwartet wird, wird von dem Baustein 22 wiederum ein Einschaltsignal generiert, durch das die Zentraleinheit 2 von dem stand-by-modus in den Datenempfangsmodus überführt wird. Wird die nächste Datensendung nach 3.000 Takten erwartet, so kann dies beispielsweise geschehen, wenn in der Zentraleinheit 10 2.980 Takte abgezählt worden sind. Nach weiteren 20 Takten geht dann die nächste Datensendung der entsprechenden Luftdruckkontrollvorrichtung 4a bis 4d ein.

Aufgrund von Gangunterschieden der Zeitmesser in der Luftdruckkontrollvorrichtung 4 bzw. in der Zentraleinheit 2 kann es dazu kommen, daß in der Luftdruckkontrollvorrichtung 4 bzw. in der Zentraleinheit 2 unterschiedliche Absolutzeiten gemessen werden. So kann es also beispielsweise dazu kommen, daß in der Zentraleinheit 10 bei dem oben genannten Beispiel bis zum Empfang der nächsten Datensendung nicht 3.000 Takte, sondern beispielsweise 3.300 Takte abgezählt werden. Da die Luftdruckkontrollvorrichtung 4 die Datensendung nach 3.000 innerhalb der Luftdruckkontrollvorrichtung 4 abgezählten Takten übermittelt hat, kann die Zentraleinheit daraus schließen, daß die von der Luftdruckkontrollvorrichtung 4 übermittelte Zeitangabe mit 1,1 multipliziert werden muß, um einen Gleichlauf der Uhren in der Zentraleinheit 2 und in der entsprechenden Luftdruckkontrollvorrichtung zu erreichen. Wird von der entsprechenden Luftdruckkontrollvorrichtung also beispielsweise angegeben, daß die nächste Datensendung in 120 Sekunden zu erwarten ist, so bedeutet dies in dem gewählten Beispiel, daß sich die Zentraleinheit erst nach 132 Sekunden bzw. 6.600 Takten auf die nächste Datensendung vorzubereiten braucht. Es reicht dann beispielsweise aus, wenn 6.580 Takte nach dem Empfang der letzten Datensendung das Einschaltsignal durch den Baustein 22 generiert wird.

### Bezugszeichenliste

- 2: Zentraleinheit
- 4a-4d: Luftdruckkontrollvorrichtung
- 6a-6d: Kraftfahrzeugräder
- 8: Batterie
- 10: Mikroprozessor
- 12: Druckmesser
- 14: Taktgeber
- 16: Ausgabeeinheit
- 18: Eingabe-/Ausgabeeinheit
- 20: Leitung
- 22: Baustein

## Patentansprüche

1. Verfahren zur Übertragung von Daten in einem **Luftdruckkontrollsystem eines Kraftfahrzeuges** mit
- einer Zentraleinheit (2), die sich zeitweise in einem stand-by-modus und zeitweise in einem Datenempfangsmodus befindet und die durch ein Einschaltsignal von dem stand-by-modus in den Datenempfangsmodus schaltbar ist
- mindestens einer Luftdruckkontrollvorrichtung (4a bis 4d), **die einem Rad (6a bis 6d) des Kraftfahrzeuges zugeordnet ist und** die in zeitlichen Abständen Daten an die Zentraleinheit (2) sendet, wobei sich die Zentraleinheit (2) während einer Datensendung im Datenempfangsmodus befindet,
**dadurch gekennzeichnet, dass**
- in der Zentraleinheit (2) eine Information darüber eingegeben wird, in welchen zeitlichen Abständen die Datensendungen von der Luftdruckkontrollvorrichtung (4a bis 4d) zu erwarten sind
- in der Zentraleinheit (2) auf Basis der genannten Information der Zeitpunkt bestimmt wird, zu dem nach Empfang einer Datensendung von einer Luftdruckkontrollvorrichtung (4a bis 4d) die nächste Datensendung von der Luftdruckkontrollvorrichtung (4a bis 4d) zu erwarten ist und dass
- in der Zentraleinheit (2) kurz vor dem Zeitpunkt, zu dem die nächste Datensendung zu erwarten ist, das Einschaltsignal generiert wird, so dass die Zentraleinheit (2) von dem stand-by-modus in den Datenempfangsmodus übergeht, und
- in der Zentraleinheit (2) nach Erhalt der Datensendung ein Ausschaltsignal generiert wird, so dass die Zentraleinheit (2) wieder von dem Datenempfangsmodus in den stand-by-modus übergeht.

2. Verfahren zur Übertragung von Daten in einem **Luftdruckkontrollsystem eines Kraftfahrzeuges** nach Anspruch 1, **dadurch gekennzeichnet, dass** die Luftdruckkontrollvorrichtung (4a bis 4d) in regelmäßigen zeitlichen Abständen Daten an die Zentraleinheit (2) sendet und die Information über den regelmäßigen zeitlichen Abstand in die Zentraleinheit (2) eingegeben wird.

3. Verfahren zur Übertragung von Daten in einem **Luftdruckkontrollsystem eines Kraftfahrzeuges** nach Anspruch 1, **dadurch gekennzeichnet, dass** die Luftdruckkontrollvorrichtung (4a bis 4d) in zeitlichen Abständen Daten an die Zentraleinheit (2) sendet und jede Datensendung eine Information darüber enthält, in welchem zeitlichen Abstand die nächste Datensendung von der Luftdruckkontrollvorrichtung (4a bis 4d) zu erwarten ist.

4. Verfahren zur Übertragung von Daten in einem **Luftdruckkontrollsystem eines Kraftfahrzeuges** nach Anspruch 3, **dadurch gekennzeichnet, dass** die Information darüber, in welchem zeitlichen Abstand die nächste Datensendung gesendet wird, nach einem Algorithmus in der Luftdruckkontrollvorrichtung (4a bis 4d) generiert wird.

5. Verfahren zur Übertragung von Daten in einem **Luftdruckkontrollsystem eines Kraftfahrzeuges** nach einem der Ansprüche 1 bis 4, **dadurch gekennzeichnet, dass** in die Zentraleinheit (2) anhand eines Vergleiches die zeitlichen Abstände, zu denen in der Zentraleinheit (2) Datensendungen eingehen und die von dem Sender angegeben worden sind, ein Korrekturwert berechnet und abgespeichert wird, der es erlaubt, eine von der Luftdruckkontrollvorrichtung (4a bis 4d) angegebene Zeitspanne in eine in der Zentraleinheit (2) gemessene Zeitspanne umzuwandeln.

6. Verfahren zur Übertragung von Daten in einem **Luftdruckkontrollsystem eines Kraftfahrzeuges** nach einem der Ansprüche 1 bis 5, **dadurch gekennzeichnet, dass** die Zentraleinheit (2), wenn sie eine vorherige erwartete Datensendung der Luftdruckkontrollvorrichtung (4a bis 4d) nicht empfangen konnte, sich in den Datenempfangsmodus schaltet und dort solange verbleibt, bis sie von der Luftdruckkontrollvorrichtung (4a bis 4d) eine neue Datensendung empfängt.

7. **Luftdruckkontrollsystem für ein Kraftfahrzeuges mit**
- einer Zentraleinheit (2), die sich zeitweise in einem stand-by-modus und zeitweise in einem Datenempfangsmodus befindet und die durch ein Einschaltsignal von dem stand-by-modus in den Datenempfangsmodus schaltbar ist.
- mindestens einer Luftdruckkontrollvorrichtung (4a bis 4d), **die einem Rad (6a bis 6d) des Kraftfahrzeuges zugeordnet ist und** die in zeitlichen Abständen Daten an die Zentraleinheit (2) sendet, wobei sich die Zentraleinheit (2) während einer Datensendung im Datenempfangsmodus befindet, **dadurch gekennzeichnet, dass**
- in der Zentraleinheit (2) eine Information darüber eingebbar ist, in welchen zeitlichen Abständen die Datensendungen von der Luftdruckkontrollvorrichtung (4a bis 4d) zu erwarten sind und dass die Zentraleinheit (2) enthält:
- einen Zeitgeber, mit dem auf Basis der genannten Information der Zeitpunkt bestimmbar ist, zu dem nach Empfang einer Datensendung von der Luftdruckkontrollvorrichtung (4a bis 4d) die nächste Datensendung von der Luftdruckkontrollvorrichtung (4a bis 4d) zu erwarten ist
- Mittel zum Generieren des Einschaltssignals und das
- die Luftdruckkontrollvorrichtung (4a bis 4d) einen Zeitgeber (14) enthält, mit dem bestimmbar ist, wann nach einer Datensendung die nächste Datensendung zu senden ist.

8. **Luftdruckkontrollsystem für ein Kraftfahrzeuges** nach Anspruch 7, **dadurch gekennzechnet, dass** in der Luftdruckkontrollvorrichtung (4a bis 4d) ein Algorithmus implementiert ist, der eine Zufallszahl generiert.

## Claims

1. Method for transmitting data in an air pressure monitoring system of a motor vehicle having
- a central unit (2) which sometimes is in a stand-by mode and sometimes is in a data reception mode and which can be switched from the stand-by mode into the data reception mode by means of a switch-on signal,
- by means of an air pressure monitoring device (4a to 4d) which is assigned to a wheel (6a to 6d) of the motor vehicle and which transmits data to the central unit (2) in time intervals, wherein the central unit (2) is in the data reception mode during a data transmission,
**characterized in that**
- information indicating the time intervals at which the data transmissions from the air pressure monitoring device (4a to 4d) are to be expected is input into the central unit (2),
- the time at which the next data transmission from the air pressure monitoring device (4a to 4d) is to be expected after the reception of a data transmission from an air pressure monitoring device (4a to 4d) is determined in the central unit (2) on the basis of the aforesaid information, and **in that**
- the switch-on signal is generated in a central unit (2) just before the time at which the next data transmission is to be expected, with the result that the central unit (2) changes from the stand-by mode into the data-reception mode, and
- a switch-off signal is generated in the central unit (2) after the reception of the data transmission with the result that the central unit (2) changes again from the data-reception mode into the stand-by mode.

2. Method for transmitting data in an air pressure monitoring system of a motor vehicle according to Claim 1, **characterized in that** the air pressure monitoring device (4a to 4d) transmits data to the central unit (2) at regular time intervals and information relating to the regular time interval is input into the central unit (2).

3. Method for transmitting data in an air pressure monitoring system of a motor vehicle according to Claim 1, **characterized in that** the air pressure monitoring device (4a to 4d) transmits data to the central unit (2) at regular time intervals, and each data transmission contains information about the time interval at which the next data transmission is to be expected from the air pressure monitoring device (4a to 4d).

4. Method for transmitting data in an air pressure monitoring system of a motor vehicle according to Claim 3, **characterized in that** the information about the time interval at which the next data transmission is transmitted is generated in the air pressure monitoring device (4a to 4d) according to an algorithm.

5. Method for transmitting data in an air pressure monitoring system of a motor vehicle according to one of Claims 1 to 4, **characterized in that** a correction value which permits a time period which is specified by the air pressure monitoring device (4a to 4d) to be converted into a time period which is measured in the central unit (2) is calculated and stored in the central unit (2) by reference to a comparison of the time intervals at which data transmissions are received in the central unit (2), and which have been specified by the transmitter.

6. Method for transmitting data in an air pressure monitoring system of a motor vehicle according to one of Claims 1 to 5, **characterized in that** if the central unit (2) was not able to receive a previous, expected data transmission from the air pressure monitoring device (4a to 4d), said central unit (2) switches into the data-reception mode and remains there until it receives a new data transmission from the air pressure monitoring device (4a to 4d).

7. Air pressure monitoring system for a motor vehicle having
- a central unit (2) which sometimes is in a stand-by mode and sometimes is in a data-reception mode and which can be switched from the stand-by mode into the data reception mode by means of a switch-on signal,
- at least one air pressure monitoring device (4a to 4d) which is assigned to a wheel (6a to 6d) of the motor vehicle and which transmits data to the central unit (2) at time intervals, wherein the central unit (2) is in the data-reception mode during a data transmission, **characterized in that**,
- information relating to the time intervals at which the data transmissions are to be expected from the air pressure monitoring device (4a to 4d) can be input into the central unit (2), and **in that** the central unit (2) contains:
- a timer with which the time at which the next data transmission is to be expected from the air pressure monitoring device (4a to 4d) after the reception of a data transmission from the air-pressure monitoring device (4a to 4d) can be determined on the basis of the aforesaid information,
- means for generating the switch-on signal, and **in that**
- the air pressure monitoring device (4a to 4d) contains a timer (14) with which it is possible to determine when the next data transmission is to be transmitted after a data transmission.

8. Air pressure monitoring system for a motor vehicle according to Claim 7, **characterized in that** an algorithm which generates a random number is implemented in the air pressure monitoring device (4a to 4d).

## Revendications

1. Procédé pour la transmission de données dans un système de contrôle de pression d'air d'un véhicule automobile comprenant
- une unité centrale (2) qui se trouve par intermittence en un mode veille et par intermittence en un mode de réception de données et qui peut être commutée du mode veille en le mode de réception de données par un signal d'activation
- au moins un dispositif de contrôle de la pression d'air (4a à 4d) qui est associé à une roue (6a à 6d) du véhicule automobile et qui envoie à certains intervalles des données à l'unité centrale (2), l'unité centrale (2) se trouvant en mode de réception des données pendant une émission de données,
**caractérisé en ce que**
- dans l'unité centrale (2) est entrée une information indiquant les intervalles auxquels sont attendues les émissions de données du dispositif de contrôle de la pression d'air (4a à 4d)
- le moment auquel, après la réception d'une émission de données d'un dispositif de contrôle de la pression d'air (4a à 4d), est attendue l'émission de données suivantes du dispositif de contrôle de la pression d'air (4a à 4d) est déterminé dans l'unité centrale (2) en se basant sur ladite information
- le signal d'activation est généré dans l'unité centrale (2) juste avant le moment auquel est attendue l'émission de données suivantes de manière à ce que l'unité centrale passe du mode veille au mode de réception de données, et
- un signal de désactivation est généré dans l'unité centrale (2) après la réception de l'émission de données de manière à ce que l'unité centrale (2) retourne de nouveau du mode de réception de données en mode veille.

2. Procédé pour la transmission de données dans un système de contrôle de pression d'air d'un véhicule automobile selon la revendication 1, **caractérisé en ce que** le dispositif de contrôle de la pression d'air (4a à 4d) envoie à intervalles réguliers des données à l'unité centrale (2) et l'information sur l'intervalle régulier est entrée dans l'unité centrale (2).

3. Procédé pour la transmission de données dans un système de contrôle de pression d'air d'un véhicule automobile selon la revendication 1, **caractérisé en ce que** le dispositif de contrôle de la pression d'air (4a à 4d) envoie à certains intervalles des données à l'unité centrale (2) et chaque émission de données contient une information sur l'intervalle auquel est attendue la prochaine émission de données de la part du dispositif de contrôle de la pression d'air (4a à 4d).

4. Procédé pour la transmission de données dans un système de contrôle de pression d'air d'un véhicule automobile selon la revendication 3, **caractérisé en ce que** l'information sur l'intervalle auquel est envoyée la prochaine émission de données est générée d'après un algorithme dans le dispositif de contrôle de la pression d'air (4a à 4d).

5. Procédé pour la transmission de données dans un système de contrôle de pression d'air d'un véhicule automobile selon l'une des revendications 1 à 4, **caractérisé en ce que** l'unité centrale (2), au moyen d'une comparaison entre les intervalles auxquels les émissions de données entrent dans l'unité centrale (2) et qui ont été donnés par l'émetteur, calcule et mémorise une valeur de correction qui permet de convertir un intervalle de temps indiqué par le dispositif de contrôle de la pression d'air (4a à 4d) en un intervalle de temps mesuré dans l'unité centrale (2).

6. Procédé pour la transmission de données dans un système de contrôle de pression d'air d'un véhicule automobile selon l'une des revendications 1 à 5, **caractérisé en ce que** l'unité centrale (2), si elle n'a pas pu recevoir une émission de données précédemment attendue de la part du dispositif de contrôle de la pression d'air (4a à 4d), passe en mode de réception de données et y reste jusqu'à ce qu'elle reçoive une nouvelle émission de données de la part du dispositif de contrôle de la pression d'air (4a à 4d).

7. Système de contrôle de la pression d'air pour un véhicule automobile comprenant :
- une unité centrale (2) qui se trouve par intermittence en un mode veille et par intermittence en un mode de réception de données et qui peut être commutée du mode veille en le mode de réception de données par un signal d'activation,
- au moins un dispositif de contrôle de la pression d'air (4a à 4d) qui est associé à une roue (6a à 6d) du véhicule automobile et qui envoie à certains intervalles des données à l'unité centrale (2), l'unité centrale (2) se trouvant en mode de réception des données pendant une émission de données,
**caractérisé en ce que**
- dans l'unité centrale (2) il est possible d'entrer une information indiquant les intervalles auxquels sont attendues les émissions de données du dispositif de contrôle de la pression d'air (4a à 4d) et **en ce que** l'unité centrale (2) comprend :
- une horloge à l'aide de laquelle il est possible de définir, en se basant sur ladite information, le moment auquel, après la réception d'une émission de données du dispositif de contrôle de la pression d'air (4a à 4d), est attendue l'émission de données suivante du dispositif de contrôle de la pression d'air (4a à 4d),
- des moyens pour générer le signal d'activation et **en ce que**
- le dispositif de contrôle de la pression d'air (4a à 4d) contient une horloge (14) avec laquelle il est possible de déterminer le moment après une émission de données auquel doit être envoyée l'émission de données suivante.

8. Système de contrôle de la pression d'air pour un véhicule automobile selon la revendication 7, **caractérisé en ce que** dans le dispositif de contrôle de la pression d'air (4a à 4d) est mis en oeuvre un algorithme qui génère un nombre aléatoire.
